# EUROPÄISCHE PATENTSCHRIFT

(11) **EP 0 648 235 B1**
(45) Veröffentlichungstag und Bekanntmachung des Hinweises auf die Patenterteilung: **27.11.1996**
(21) Anmeldenummer: 93915759.0
(22) Anmeldetag: 01.07.1993
(51) Int. Cl.: C08F 220/04, C08F 226/02, C11D 3/37

(54) **COPOLYMERE DER ALLYLIMINODIESSIGSÄURE MIT UNGESÄTTIGTEN CARBONSÄUREN UND DEREN VERWENDUNG ALS KOMPLEXBILDNER, PEROXIDSTABILISATOREN, BUILDER IN WASCH- UND REINIGUNGSMITTELN UND DISPERGATOREN**
COPOLYMERS OF ALLYLIMINODIACETIC ACID WITH UNSATURATED CARBOXYLIC ACIDS AND THEIR USE AS COMPLEXING AGENTS, PEROXIDE STABILIZERS, BUILDERS IN WASHING AND CLEANING PRODUCTS AND DISPERSING AGENTS
COPOLYMERES DE L'ACIDE IMINODIACETIQUE ALLYLIQUE AVEC DES ACIDES CARBOXYLIQUES INSATURES ET LEUR UTILISATION COMME AGENTS COMPLEXANTS, COMME STABILISATEURS DU PEROXYDE, COMME ADJUVANTS DANS DES PRODUITS DE LAVAGE ET DE NETTOYAGE ET COMME DISPERSANTS

(30) Priorität: 03.07.1992 DE 4221863
(43) Veröffentlichungstag der Anmeldung: 19.04.1995
(73) Patentinhaber: Chemische Fabrik Stockhausen GmbH, D-47805 Krefeld (DE)
(72) Erfinder: BREHM, Helmut, D-4150 Krefeld (DE); DAHMEN, Kurt, D-4050 Mönchengladbach-Rheydt (DE); MERTENS, Richard, D-47803 Krefeld (DE)
(74) Vertreter: Klöpsch, Gerald, Dr.-Ing. Patentanwalt
(86) Internationale Anmeldenummer: EP9301694
(87) Internationale Veröffentlichungsnummer: WO9401477

(56) Entgegenhaltungen:
- FR-A- 2 288 113
- US-A- 2 739 949

## Beschreibung

In der Vergangenheit haben polymere Carbonsäuren, wie z. B. Polyacrylsäure, Polymethacrylsäure, Polyhydroxyacrylsäure und Polymaleinsäure sowie ihre Copolymerisate, große Bedeutung in phosphatreduzierten und phosphatfreien Waschmitteln erlangt. Die Vorteile der polymeren Carbonsäuren beruhen auf ihrer guten Dispergierwirkung von Niederschlägen in der Waschflotte, hier besonders Calciumcarbonat und Schmutzpartikel, sowie einer guten Transportfunktion von Calciumionen aus der wäßrigen Waschmittellauge in die Zeolithe der Waschmittel.

Die komplexbildenden Eigenschaften der Polycarbonsäuren gegenüber Schwermetallionen sind dagegen völlig unbefriedigend. Da aber Schwermetallionen von Cu, Fe und Mn, die in Waschflotten immer zugegen sind, die peroxidischen Bleichmittel eines Waschmittels zersetzen und somit nicht nur das Waschergebnis beeinträchtigen, sondern auch eine Schädigung des Textilgutes verursachen, müssen Waschmittel wirksame Schwermetallkomplexbildner enthalten, um die negativen Auswirkungen der Schwermetallionen auszuschließen. Typische Schwermetallkomplexbildner, die in phosphatfreien Waschmitteln Verwendung finden, sind Nitrilotriacetat, Ethylendiamintetraacetat oder Aminomethylenphosphonsäuren.

D'Alelio, Journal of Macromolecular Science-Chemistry, Vol. A6, 513-567 (1972) beschreibt Polymere und deren Metallkomplexe, die durch Umsetzung von Polyglycidylmethacrylat mit Aminoessigsäure bzw. Iminodiessigsäure hergestellt werden.

Als großer Nachteil dieser Polymeren ist die Hydrolyseempfindlichkeit der Methacrylsäreestergruppe anzusehen. Besonders in alkalischen Waschflotten und bei höheren Temperaturen ist die Estergruppe nicht stabil und wird schnell verseift. So entsteht aus diesen Polymeren durch Hydrolyse eine Homopolymethacrylsäure, die gegenüber Schwermetallionen keine komplexierenden Eigenschaften mehr besitzt.

Die US-PS 4,868,263 beschreibt Copolymere für die Wasserbehandlung aus einem α,β-ungesättigtem Monomeren, bevorzugt mit einer Säuregruppe, und aminhaltigen Allylethern als zweitem Monomeren, das aus Allylglycidether und einer aminofunktionellen Verbindung hergestellt wird. Als aminofunktionelle Verbindungen werden Mono- und Dialkylamine und Aminocarbonsäuren, wie z.B. N-Methylglycin und Iminodiessigsäure eingesetzt. Die Monomeren auf Basis von Allylethern sind sehr träge reagierende Monomere in einer radikalischen Polymerisation und zeigen eine große Tendenz zur abbrechenden Kettenübertragung (s. Houben-Weyl, Methoden der Organischen Chemie, Bd. 14/1, s. 1145). Aufgrund dieser Eigenschaften lassen sich mit Allylethern nur Polymerisate mit niedrigen Molgewichten herstellen, und der Umsatz des Allylethermonomeren bleibt oft unvollständig.

Die EP 0 437 843 beschreibt Copolymere aus ungesättigten Säuren und Alkenylaminomethylenphosphonsäuren sowie ihre Verwendung als Komplexbildner und als Co-Builder in Waschmitteln.

Aufgabe der Erfindung war die Bereitstellung von phosphorfreien, hydrolysestabilen Polycarbonsäuren mit komplexierenden Eigenschaften, deren Molgewichte sich über einen großen Bereich variieren lassen.

Gegenstand der Erfindung sind somit Polymerisate aus
a) 1 - 50 Gew.-% N-Allyliminodiessigsäure oder deren Salzen,
b) 50 - 99 Gew.-% einer oder mehreren ungesättigten, polymerisierbaren Carbonsäuren der Formel I 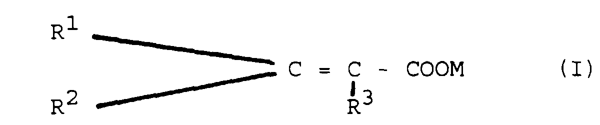 worin R¹ = Wasserstoff, C₁ - C₄-Alkyl oder -COOM, R² = Wasserstoff oder C₁ - C₄-Alkyl, R³ = Wasserstoff, C₁ - C₄-Alkyl oder CH₂COOM und M = Wasserstoff, Ammonium, Alkali- oder Erdalkalimetall bedeuten,
   und
c) 0 - 40 Gew.-% wasserlöslichen, mit a) und b) copolymerisierbaren Monomeren.

Die erfindungsgemäßen Polymerisate verbinden die bekannten Eigenschaften zweier Produktklassen in einem Polymeren. Die Polymerisate zeigen die guten dispergierenden Eigenschaften der Polycarbonsäuren und zugleich komplexieren sie in hohem Maße Schwermetallionen, vergleichbar den klassischen Komplexbildnern Nitrilotriacetat oder Ethylendiamintetraacetat. Durch Variation der Monomerverhältnisse und des Molgewichtes können Polymerisate mit optimierten Eigenschaften für unterschiedliche Anwendungen hergestellt werden. Verwendung finden die Polymerisate in der Scale-Inhibierung saliner Wässer, wie z. B. in Wasserkühlern, oder zur Dispergierung von Ca-Carbonat in Waschflotten oder Färbeflotten oder als Builder und Co-Builder in Waschmitteln oder als Stabilisator für peroxidhaltige Formulierungen.
Die ungesättigten, polymerisierbaren Carbonsäuren nach b) können z. B. sein: (Meth)acrylsäure, Ethylacrylsäure, Butylacrylsäure, 2,2-Dimethylacrylsäure, Buten-2-säure, Hepten-2-säure, Itaconsäure, Maleinsäure, Fumarsäure oder Methylmaleinsäure. Als Monomere nach c) seien beispielhaft genannt:
2-Acrylamido-2-methylpropansulfonsäure, Vinylsulfonsäure, (Meth)allylsulfonsäure, (Meth)acrylamid, N-Propyl(meth)acrylamid, 3-Di-methylaminopropyl(meth)acrylamid, Hydroxyethyl(meth)acrylat, Hydroxypropy(meth)acrylat, Methoxypolyethylenglykol(meth)acrylat, Maleinsäurehalbester, Maleinsäurehalbamide, Vinylpryrrolidon, 3-Dimethylaminoethyl(meth)acrylat.

Bevorzugt werden Polymerisate aus 10 - 40 Gew.% N-Allyliminodiessigsäure und /oder deren Salzen als Monomer a und 60 - 90 Gew.% wenigstens einer ungesättigten polymerisierbaren Carbonsäure der Formel I (Monomer b), die auch in Salzform eingesetzt werden kann. Sofern wasserlösliche Monomere c mit einpolymerisiert werden, so liegt ihr Anteil bei 10 - 40 Gew.% bei einem bevorzugten Anteil der N-Allyliminodiessigsäure oder deren Salzen von 10 - 30 Gew.% und einem bevorzugten Anteil der ungesättigten polymerisierbaren Carbonsäure der Formel I von 50 - 70 Gew.%, wobei die Summe der 3 Bestandteile stets 100 betragen muß.

Überraschenderweise hat sich gezeigt, daß sich mit Allylliminodiessigsäure Copolymerisate herstellen lassen, deren Molgewichte über einen großen Bereich variiert werden können; außerdem kann die Allyliminodiessigsäure bis zu hohen Umsätzen, d. h. > 99 % polymerisiert werden.

Die erfindungsgemäßen Copolymerisate werden durch radikalische Polymerisation, bevorzugt in wäßriger Lösung, hergestellt. Die Polymerkonzentration beträgt 20 - 70 %. In einem bevorzugten Herstellungsverfahren wird die Allyliminodiessigsäure in Wasser vorgelegt, und bei 50 - 100 °C werden die Comonomeren und die Polymerisationskatalysatoren in 1 bis 5 Stunden zudosiert.

Das Molgewicht der Copolymerisate läßt sich durch Variation der Katalysatormenge gezielt verändern und kann zwischen 1.000 und 500.0000 g/Mol, bevorzugt zwischen 2.000 und 100.000 g/Mol, liegen.

Die Erfindung betrifft ferner die Verwendung der erfindungsgemäßen Polymerisate als Komplexbildner, Peroxidstabilisatoren und Builder in Waschmitteln, Dispergatoren und Härtestabilisatoren.

Die Erfindung wird durch die nachfolgenden Beispiele erläutert.

### Beispiele

### Herstellung von N-Allyliminodiessigsäure-Hydrochlorid

57,0 g Allylamin und 150 g Wasser werden in einem Kolben, der mit Rührer, Tropftrichter, Thermometer und pH-Elektrode ausgerüstet ist, vorgelegt und auf 60 °C erwärmt. Innerhalb 1 Stunde werden 256 g Chloracetat portionsweise zugegeben, und der pH-Wert wird mittels 45%iger Natronlauge bei 8 - 9 gehalten. Die Temperatur liegt bei 60 - 65 °C. Man läßt 2 Stunden nachreagieren, versetzt dann mit konzentrierter Salzsäure bis zum pH-Wert von 1,5, kühlt ab und filtriert. Das Filtrat wird zur Trockene eingeengt und der Rückstand 1 Stunde mit 900 g Eisessig bei 100 °C gerührt. Man filtriert heiß, läßt abkühlen und saugt den Niederschlag scharf ab. Abschließend wird mit Aceton gewaschen und getrocknet.
- Ausbeute:: 155 g (74 %)
SZ: 14,15 mmol/g (Th: 14,32)
CI⁻: 4,80 mmol/g (Th: 4,77)
Doppelbindung: 4,77 mmol/g (Th: 4,77)
SZ = Säurezahl Th = theoretischer Wert

### Beispiele 1 bis 17

### Allgemeines Herstellungsverfahren für die Copolymerisate

Allyliminodiessigsäure-Hydrochlorid wird in Wasser gelöst und in einem Kolben mit Rührer, Rückflußkühler und mehreren Dosierstellen auf 80 °C erwärmt. Alternativ kann auch die angesäuerte und filtrierte Reaktionslösung aus dem vorangegangenen Herstellungsbeispiel verwendet werden. Während 2 Stunden werden kontinuierlich die Comonomeren und die Katalysatoren zudosiert, und anschließend wird eine weitere Stunde bei 80 °C gerührt. Dann wird die Polymerlösung abgekühlt und mit Natronlauge auf pH 7 - 8 neutralisiert. Der Festkörpergehalt wird auf 40 % eingestellt.

Die Zusammensetzung und die Kenndaten der Copolymerisatlösungen sind in den Tabellen 1 und 2 aufgelistet.

Folgende Abkürzungen werden benutzt:
- NPS: Natriumperoxodisulfat
- NDS: Natriumdisulfit
- AMPS: 2-Acrylamidomethylpropansulfonsäure
- MAcS: Methacrylsäure
- MSA: Maleinsäureanhydrid
- AcA: Acrylamid
- HEA: Hydroxyethylacrylat
- DIMAPA: 3-Dimethylaminopropylacrylamid

In den anwendungstechnischen Prüfungen wurde als Vergleich eine Homo-Polyacrylsäure mit einem Molgewicht von 7.300 g/Mol eingesetzt.

**Tabelle 1**

| Allyliminodiessig säure | Acrylsäure | NPS | NDS | Viskosität (1) | MGPC (2) | Restmonomergehalt an Allyliminodiessigsäure (mm) (3) |
|---|---|---|---|---|---|---|
| (g) | (g) | (g) | (g) | (mPa.s) | | |
| Polymer 1 2 | 80 | 10 | 5 | 600 | 5.100 | 20 |
| Polymer 2 10 | 80 | 10 | 5 | 1.000 | 28.700 | 90 |
| Polymer 3 20 | 80 | 5 | 2 | 7.700 | 76.000 | 1.800 |
| Polymer 4 20 | 80 | 5 | 3,5 | 4.700 | 53.000 | 1.300 |
| Polymer 5 20 | 80 | 7,5 | 5 | 1.000 | 24.000 | 560 |
| Polymer 6 20 | 80 | 10 | 5 | 450 | 15.000 | 490 |
| Polymer 7 20 | 80 | 20 | 10 | 300 | 6.200 | 400 |
| Polymer 8 40 | 80 | 10 | 5 | 1.350 | 19.500 | 4.100 |
| Polymer 9 60 | 80 | 10 | 5 | 750 | 6.200 | n. b. |

| | | | | | | |
|---|---|---|---|---|---|---|
| (1) Die Produkt-Viskosität wurde mit einem Brookfield Rotationsviskosimeter (Spindel 3/ 20 UpM) bei 25 °C gemessen. | | | | | | |
| (2) MGPC ist das Molgewicht im Peakmaximum der Molekulargewichtsbestimmung mittels Gel-Permeationschromatographie | | | | | | |
| (3) bestimmt mittels Hochdruck-Flüssigchromatographie n. b. = nicht bestimmt | | | | | | |

**Tabelle 2**

| Allyliminodiessig säure | Acrylsäure | Comonomer | NPS | NDS | Viskosität | MGPC |
|---|---|---|---|---|---|---|
| (g) | (g) | (g) | (g) | (g) | (mPa.s) | |
| Polymer 10 20 | 60 | 20 AMPS | 7,5 | 5 | 650 | 10.500 |
| Polymer 11 20 | 60 | 40 AMPS | 7,5 | 5 | 950 | |
| Polymer 12 20 | 60 | 10 MAcS | 10 | 5 | 570 | |
| Polymer 13 20 | 70 | 10 MSA | 10 | 5 | 1.000 | 11.300 |
| Polymer 14 20 | 60 | 20 MSA | 10 | 5 | 320 | |
| Polymer 15 20 | 60 | 20 AcA | 10 | 5 | 5.800 | 7.900 |
| Polymer 16 20 | 60 | 20 HEA | 10 | 5 | 1.650 | |
| Polymer 17 20 | 60 | 20 DIMAPA | 10 | 5 | 350 | 8.800 |

### Anwendungstechnische Prüfungen

### 1. Bestimmung des Ca-Bindevermögens

2,5 g Polymerlösung mit 40 % wirksamer Substanz werden mit 100 g Wasser gemischt und mit Natronlauge auf pH 11 eingestellt. Es werden 10 ml 10%ige Sodalösung zugemischt und anschließend mit 0,25 molarer Ca-Acetatlösung bis zur bleibenden Trübung titriert. (Literaturstelle: F. Rich ter, Tenside Surfactants Detergents 24 (1987) 4, S. 215)

| | Ca-Bindevermögen mg CaCO₃/1 g Polymer |
|---|---|
| Polymer 1 | 155 |
| Polymer 2 | 178 |
| Polymer 3 | 188 |
| Polymer 6 | 164 |
| Polymer 7 | 173 |
| Polymer 8 | 167 |
| Polymer 9 | 197 |
| Polymer 14 | 220 |
| Polymer 17 | 138 |
| | |
| Homopolyacrylsäure | 145 |

### 2. Inhibierung gegenüber Ca-Karbonat Ausfällungen

Mit der folgenden Prüfmethode wird die Scale-Inhibierung und das Dispergiervermögen der Polymerisate geprüft.

1,0 bis 3,0 g Polymerlösung mit 40 % wirksamer Substanz werden in 1 1 Leitungswasser mit 27 °dH gelöst. Es wird in 20 Minuten auf 80 °C erwärmt und sofort optisch beur teilt. Je geringer die Einsatzmenge bleibt, um eine Aus fällung oder Trübung zu verhindern, um so besser ist die Wirkung des Polymers.

| | Produktkonzentration g/l | | | |
|---|---|---|---|---|
| | 1,0 | 1,5 | 2,0 | 3,0 |
| Polymer 1 | opal | schwach opal | klar | |
| Polymer 2 | opal | opal | klar | |
| Polymer 6 | opal | schwach opal | klar | |
| Polymer 7 | opal | schwach opal | klar | |
| Polymer 8 | opal | schwach opal | klar | |
| Polymer 9 | opal | opal | klar | |
| Polymer 14 | opal | opal | klar | |
| Polymer 17 | klar | -- | -- | |
| | | | | |
| Homopolyacrylsäure | trüb | trüb | opal | klar |

### 3. Perborat-Stabilisierung

Wasserstoffperoxid und Natriumperborat werden durch Schwermetallionen katalytisch zersetzt. Diese Zersetzung erfolgt nicht nur in Lösungen, sondern kann auch bei der Lagerung eines Waschmittels auftreten, wodurch die Ver fügbarkeit des Peroxids deutlich reduziert wird. Im Test auf Perborat-Stabilisierung werden ein phosphat- und komplexbildnerfreies Waschmittel mit Perborat, Kupfersulfat und Polymer in Lösung erwärmt und die Abnahme des Peroxidgehaltes über die Zeit verfolgt.
500 ml einer wäßrigen Lösung mit
1,82 g/l Natriumperborat
5,00 g/l Waschmittel
0,14 g/l Polymer (wirksame Substanz) und
1,60 mg/l CuSO₄
werden unter standardisierten Bedingungen in 25 Minuten auf 90 °C erwärmt. Zu Beginn der Aufheizphase, bei 70 °C und bei 90 °C wird der Peroxidgehalt der Lösung jodome trisch bestimmt und in % Restperoxid angegeben.

| | **% Restperoxid** | |
|---|---|---|
| | bei 70 °C | bei 90 °C |
| Polymer 3 | 99 | 82 |
| Polymer 5 | | 77 |
| Polymer 8 | | 75 |
| Polymer 9 | | 78 |
| Polymer 14 | 98 | 72 |
| Polymer 17 | 97 | 78 |
| | | |
| Homopolyacrylsäure | 31 | < 2 |

### 4. Co-Builder-Wirkung

Die Co-Builder-Wirkung der Copolymerisate wurde in praxisnahen Waschversuchen in einem Laudner-0-meter bestimmt. Baumwollgewebe und ein Standard-Schmutzgewebe (WFK-Baumwolle, 10 C) wurden 5mal bei 90 °C für 30 Minuten gewaschen, wobei nach jeder Wäsche das Standard-Schmutzgewebe durch ein neues Gewebestück ersetzt wurde. Der Waschrohstoff hatte folgende Zusammensetzung:
12,7 % Dodecylbenzolsulfonat
7,3 % 10 EO-Talgfettalkohol
7,2 % K-Stearat
36,4 % Perborat
36,4 % Wessalith (Silikat der Firma Degussa)

Die Waschflotte enthielt
4,3 g/l Waschrohstoff
1,6 mg/l CuSO₄ x 5 H₂O und
0,15 g/l der erfindungsgemäßen Copolymerisate (wirksame Substanz).

Nach 5 Wäschen wurde an den Testgeweben die Aufhellung photometrisch mit einem Elrepho-Gerät bestimmt.

| Aufhellung | Meßwert | % |
|---|---|---|
| ohne Co-Builder | 83,1 | -- |
| Homopolyacrylsäure | 83,6 | 0,6 |
| Polymer 3 | 84,4 | 1,6 |
| Polymer 6 | 84,8 | 2,0 |
| Polymer 8 | 86,3 | 3,8 |

## Patentansprüche

1. Polymerisate aus
a) 1 - 50 Gew.% N-Allyliminodiessigsäure und/oder deren Salzen
b) 50 - 99 Gew.% einer oder mehreren ungesättigten, polymerisierbaren Carbonsäuren der Formel I 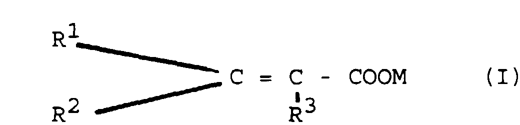 worin R¹ = Wasserstoff, C₁ - C₄-Alkyl oder COOM, R² = Wasserstoff oder C₁ - C₄-Alkyl, R³ = Wasserstoff, C₁ - C₄-Alkyl oder CH₂COOM und M = Wasserstoff, Ammonium, Alkali- oder Erdalkalimetall bedeuten,
und
c) 0 - 40 Gew.% wasserlöslichen, mit a) und b) copolymerisierbaren Monomeren.

2. Polymerisate nach Anspruch 1, dadurch gekennzeichnet, daß sie als ungesättigte, polymerisierbare Carbonsäure der Formel I (Comonomer b) Acrylsäure, Methacrylsäure, Ethylacrylsäure, Butylacrylsäure, 2,2-Dimethylacrylsäure, Buten-2-Säure, Hepten-2 Säure, Itaconsäure, Maleinsäure, Fumarsäure, Methylmaleinsäure oder Gemische dieser Monomeren enthalten.

3. Polymerisate nach Anspruch 1 oder 2, dadurch gekennzeichnet, daß sie als Comonomer c 2-Acrylamido-2-methylpropansulfonsäure, Vinylsulfonsäure, (Meth)allylsulfonsäure, (Meth)acrylamid, N-Propyl(meth)acrylamid, Hydroxyethyl(meth)acrylat, Hydroxypropyl(meth)acrylat, Methoxypolyethylenglykol(meth)acrylat, Maleinsäurehalbester, Maleinsäurehalbamide, Vinylpyrrolidon, 3-Dimethylaminoethyl(meth)acrylat oder Gemische dieser Comonomeren enthalten.

4. Polymerisate nach Anspruch 1 oder 2 aus 10 - 40 Gew.% N-Allyliminodiessigsäure und/oder deren Salzen und 60 - 90 Gew.% einer oder mehreren ungesättigten, polymerisierbaren Carbonsäuren der Formel I (Comonomer b)

5. Polymerisate nach Anspruch 1 aus 10 - 30 Gew.% N-Allyliminodiessigsäure und/oder deren Salzen und 50 - 70 Gew.% einer oder mehreren ungesättigten polymerisierbaren Carbonsäuren der Formel I (Monomer b) und 10 - 40 Gew.% wasserlöslicher Monomeren c, wobei die Summe der Monomeren a, b, c 100 betragen muß.

6. Verwendung der Polymerisate nach Anspruch 1 als Komplexbildner, Peroxidstabilisatoren und Builder in Waschmitteln, Dispergatoren und Härtestabilisatoren.

## Claims

1. Polymers of
a) 1 - 50%-wt. N-allyliminodiacetic acid and/or its salts,
b) 50 - 99%-wt. of one or several unsaturated, polymerizable carboxylic acids of the formula I 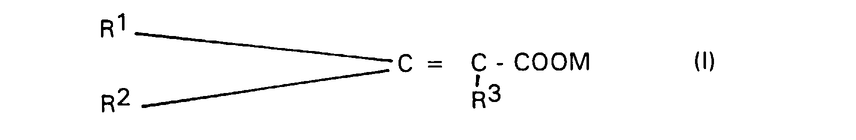 wherein R¹ = hydrogen, C₁ - C₄ alkyl or -COOM, R² = hydrogen or C₁ - C₄ alkyl, R³ = hydrogen, C₁ - C₄ alkyl or CH₂COOM, and M = hydrogen, ammonium, an alkali metal or an alkaline-earth metal,
and
c) 0 - 40%-wt. water-soluble monomers copolymerizable with a) and b).

2. The polymers according to claim 1 characterized in that they comprise as unsaturated, polymerizable carboxylic acid of formula I (comonomer b) acrylic acid, methacrylic acid, ethylacrylic acid, butylacrylic acid, 2,2-dimethylacrylic acid, 2-butenoic acid, 2-heptenoic acid, itaconic acid, maleic acid, fumaric acid, methylmaleic acid, or mixtures of these monomers.

3. The polymers according to claim 1 or 2 characterized in that they comprise as comonomer c) 2-acrylamido-2-methylpropane sulfonic acid, vinyl sulfonic acid, (meth)allyl sulfonic acid, (meth)acrylamide, N-propyl (meth) acrylamide, hydroxyethyl (meth)acrylate, hydroxypropyl (meth)acrylate, methoxypolyethylene glycol (meth)acrylate, maleic acid semiesters, maleic acid semiamides, vinyl pyrrolidone, 3-dimethylaminoethyl (meth)acrylate, or mixtures of these comonomers.

4. The polymers according to claim 1 or 2 of 10 - 40%-wt. N-allyliminodiacetic acid and/or its salts and 60 - 90%-wt. of one or several unsaturated, polymerizable carboxylic acids of formula I (comonomer b).

5. The polymers according to claim 1 of 10 - 30%-wt. N-allyliminodiacetic acid and/or its salts, and 50 - 70%-wt. of one or several unsaturated, polymerizable carboxylic acids of formula I (monomer b), and 10 - 40%-wt. water-soluble monomers c, wherein the sum of monomers a, b, c must amount to 100.

6. The use of the polymers according to claim 1 as complexing agents, peroxide stabilizers and builders in detergents, dispersing agents, and hardness stabilizers.

## Revendications

1. Polymères constitués de
a) 1 à 50% en poids d'acide N-allyliminodiacétique et/ou de ses sels,
b) 50 à 99% en poids d'un ou plusieurs acides carboxyliques insaturés, polymérisables de la formule I 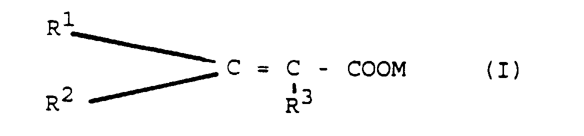 dans laquelle R¹ représente un atome d'hydrogène, un radical alkyle en C₁ à C₄ ou COMM, R² représente un atome d'hydrogène ou un radical alkyle en C₁ à C₄, R³ représente un atome d'hydrogène, un radical alkyle en C₁ à C₄, ou CH₂COOM et M représente un atome d'hydrogène, un groupement ammonium, un métal alcalin, ou un métal alcalino-terreux
et
c) 0 à 40% en poids de monomères copolymérisables avec a) et b), solubles dans l'eau.

2. Polymères suivant la revendication 1, caractérisés en ce qu'ils contiennent, à titre d'acides carboxyliques insaturés, polymérisables, de la formule I (comonomère b), l'acide acrylique, l'acide méthacrylique, l'acide éthylacrylique, l'acide butylacrylique, l'acide 2,2-diméthylacrylique, l'acide buténoïque-2, l'acide hepténoïque-2, l'acide itaconique, l'acide maléique, l'acide fumarique, l'acide méthylmaléique, ou des mélanges de ces monomères.

3. Polymères suivant la revendication 1 ou 2, caractérisés en ce qu'ils contiennent, à titre de comonomère c, l'acide 2-acrylamido-2-méthylpropanesulfonique, l'acide vinylsulfonique, l'acide (méth)allylsulfonique, le (méth) acrylamide, le N-propyl(méth)acrylamide, le (méth)acrylate d'hydroxyéthyle, le (méth)acrylate d'hydroxypropyle, le (méth)acrylate de méthoxypolyéthylèneglycol, des hémiesters de l'acide maléique, des hémiamides de l'acide maléique, la vinylpyrrolidone, le (méth)acrylate de 3-diméthylaminoéthyle, ou des mélanges de ces comonomères.

4. Polymères suivant la revendication 1 ou 2, constitués de 10 à 40% en poids d'acide N-allyliminodiacétique et/ou de ses sels et de 60 à 90% en poids d'un ou plusieurs acides carboxyliques insaturés, polymérisables, de la formule I (comonomère b).

5. Polymères suivant la revendication 1, constitués de 10 à 30% en poids d'acide N-allyliminodiacétique et/ou de ses sels et de 50 à 70% en poids d'un ou plusieurs acides carboxyliques insaturés, polymérisables, de la formule I (monomère b) et de 10 à 40% en poids de monomères c solubles dans l'eau, où la somme des monomères a, b et c doit être égale à 100.

6. Utilisation des polymères suivant la revendication 1, à titre d'agents de complexation, de stabilisateurs vis-à-vis des peroxydes et d'adjuvants dans des détergents, des dispersifs et des stabilisateurs de durcissement.
